# EUROPEAN PATENT SPECIFICATION

(11) **EP 3 863 170 B1**
(45) Date of publication and mention of the grant of the patent: **23.09.2026**
(21) Application number: 21154920.9
(22) Date of filing: 03.02.2021
(51) Int. Cl.: H02N 1/00, H02N 1/08

(54) **POWER GENERATOR**
LEISTUNGSGENERATOR UND GLEICHRICHTERSCHALTUNG
GÉNÉRATEUR DE PUISSANCE ET CIRCUIT REDRESSEUR

(30) Priority: 06.02.2020 JP 2020018621
(43) Date of publication of application: 11.08.2021
(73) Proprietor: Saginomiya Seisakusho, Inc., Tokyo 165-0033 (JP)
(72) Inventor: MORITA, Masahiro, Sayama-shi, Saitama 3501395 (JP); ASHIZAWA, Hisayuki, Sayama-shi, Saitama 3501395 (JP)
(74) Representative: V.O.

(56) References cited:
- EP-A1- 3 806 304
- WO-A1-2019/230915
- DE-A1- 2 722 303
- JP-A- 2016 131 475
- US-A1- 2011 227 545

## Description

The present invention relates to a power generator and a rectifier circuit.

JP 2018-88780 A and WO 2019/230915 A1 disclose vibration-driven energy harvesters in which two fixed electrodes and two movable electrodes each having a comb structure are arranged.

JP 2016-131475 A discloses an electrostatic induction generator constituted of a rotatable rotor having a charging section, and a stator having a conductive section facing the rotor via a cavity of a predetermined distance therefrom.

In known vibration-driven energy harvesters, in order to generate an electric power, an inductive charge of an electret changes in accordance with a change in an area in which a fixed electrode and a movable electrode face each other. This change in the inductive charge causes a change in a voltage between the fixed electrode and the movable electrode, which generates an electromotive force. The electromotive force obtained by the power generation of the vibration-driven energy harvester is applied to a load via an electrical connection to drive the load. Conventionally, an efficient power supply has been required.

The invention proposes a power generator with the features of claim 1. Further advantageous embodiments are disclosed in the dependent claims.

It is preferable that when a vibration is applied from the outside, the movable unit vibrates between the first electrode and the second electrode; and when the movable unit vibrates, the power generation element generates an electric power by the first electrode and the third electrode and generates an electric power by the second electrode and the fourth electrode.

It is preferable that the conversion unit rectifies the alternating current generated by the first electrode and the third electrode via the first rectifying unit and the second rectifying unit, and rectifies the alternating current generated by the second electrode and the fourth electrode via the third rectifying unit and the fourth rectifying unit.

It is preferable that when the movable unit moves in a first direction, the first rectifying unit supplies a current from the first electrode to the first output unit; and when the movable unit moves in a second direction opposite to the first direction, the third rectifying unit supplies a current from the second electrode to the first output unit.

It is preferable that the first rectifying unit, the second rectifying unit, the third rectifying unit, the fourth rectifying unit, the fifth rectifying unit, and the sixth rectifying unit are diodes.

It is preferable that the first electrode and the second electrode each have an electret.

There is further disclosed a rectifier circuit that is connectable to a power generation element having a first electrode, a second electrode, and a movable unit provided between the first electrode and the second electrode, the movable unit having a third electrode and a fourth electrode, the rectifier circuit comprises: a first rectifying unit provided between the first electrode and a first output unit; a second rectifying unit provided between the first electrode and a second output unit; a third rectifying unit provided between the second electrode and the first output unit; a fourth rectifying unit provided between the second electrode and the second output unit; a fifth rectifying unit provided between the movable unit and the first output unit; and a sixth rectifying unit provided between the movable unit and the second output unit.

### ADVANTAGEOUS EFFECTS OF INVENTION

According to the present invention, an electric power can be efficiently supplied.

### BRIEF DESCRIPTION OF DRAWINGS

[Fig. 1] Fig. 1 is a view showing an example of a configuration of a power generator according to a first embodiment.
[Fig. 2] Fig. 2 is a view showing an example of a configuration of a power generation element according to the first embodiment.
[Fig. 3] Fig. 3 is a view illustrating an example of an operation of the power generator according to the first embodiment.
[Fig. 4] Fig. 4 is a view illustrating a process performed by the power generator according to the first embodiment.
[Fig. 5] Fig. 5 is a view showing an example of a configuration of a power generator according to a comparative example.

### DESCRIPTION OF EMBODIMENTS

### First Embodiment

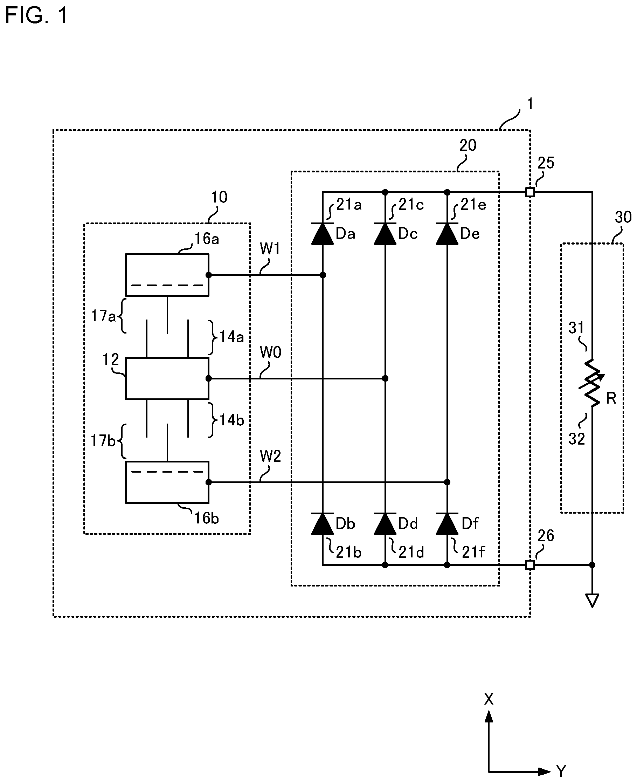

A power generator according to a first embodiment will be described with reference to the drawings. Fig. 1 is a view showing an example of a configuration of the power generator according to the first embodiment. The power generator (vibration power generator) 1, which includes a power generation element 10, a conversion unit 20, a first output unit 25, and a second output unit 26, uses a vibration to generate an electric power. The power generator 1 is an electrostatic power generator which can be used to provide a technique (energy harvesting) for obtaining an electric power by collecting energy from a vibration in the environment.

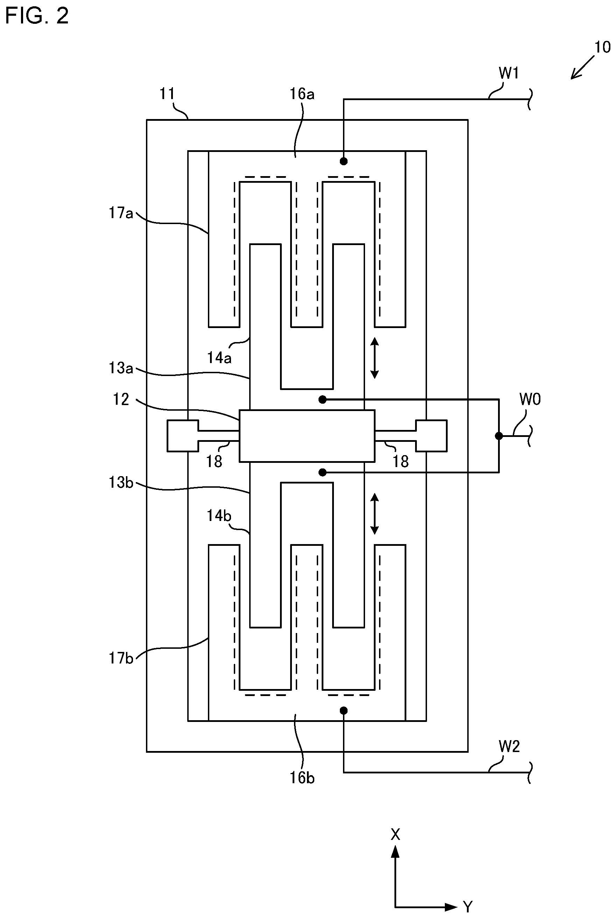

Fig. 2 is a view showing an example of a configuration of the power generation element according to the first embodiment. The power generation element (vibration-driven energy harvester) 10 includes a support frame (support member) 11, a movable unit 12, and holding units 18. The vibration-driven energy harvester 10 is manufactured by using MEMS technology with a silicon substrate or a SOI (Silicon On Insulator) substrate as a base material, for example. The support frame (base) 11 has an electrode 16a and an electrode 16b. It can be also said that the electrodes 16a, 16b are electrodes fixedly held by the support frame 11. In the following description, the fixed electrode 16a and electrode 16b will be referred to as a first fixed electrode 16a and a second fixed electrode 16b, respectively.

The movable unit 12 is configured to be movable in a vertical direction (X-axis direction) in the paper plane in the support frame 11. The movable unit 12 has an electrode 13a (hereinafter referred to as a first movable electrode) and an electrode 13b (hereinafter referred to as a second movable electrode). The first movable electrode 13a and the first fixed electrode 16a are arranged so as to face each other in the X-axis direction. The second movable electrode 13b and the second fixed electrode 16b are arranged so as to face each other in the X-axis direction. As will be described later, the vibration-driven energy harvester 10 is configured so that the first movable electrode 13a and the first fixed electrode 16a are relatively movable and the second movable electrode 13b and the second fixed electrode 16b are relatively movable. As shown in the coordinate axes of Figs. 1 and 2, a rightward direction in the paper plane orthogonal to the X axis is defined as a positive Y-axis direction. In other figures, coordinate axes may be shown with reference to the coordinate axes of Figs. 1 and 2 to clarify the orientation of each figure.

Each of the first fixed electrode 16a, the second fixed electrode 16b, the first movable electrode 13a, and the second movable electrode 13b has a comb structure having a plurality of comb teeth. In the example shown in Fig. 2, the comb teeth (tooth portions) are formed as strips extending in the X-axis direction, and a plurality of comb teeth are arranged in a horizontal direction (Y-axis direction) in the paper plane. In Fig. 2, the first fixed electrode 16a has three tooth portions and the first movable electrode 13a has two tooth portions. Further, the second fixed electrode 16b has three tooth portions and the second movable electrode 13b has two tooth portions. Each of the first fixed electrode 16a, the second fixed electrode 16b, the first movable electrode 13a, and the second movable electrode 13b has a comb-shaped portion (comb portion) and serves as a comb-shaped electrode. The number and arrangement of comb teeth provided on the first fixed electrode 16a, the second fixed electrode 16b, the first movable electrode 13a, and the second movable electrode 13b are not limited to those in the illustrated example.

The first fixed electrode 16a and the first movable electrode 13a are arranged so that their comb portions face each other. A comb portion 17a of the first fixed electrode 16a and a comb portion 14a of the first movable electrode 13a are formed so as to interdigitate with each other. The first fixed electrode 16a has a comb shape corresponding to a comb shape of the first movable electrode 13a.

The second fixed electrode 16b and the second movable electrode 13b are arranged so that their comb portions face each other. A comb portion 17b of the second fixed electrode 16b and a comb portion 14b of the second movable electrode 13b are formed so as to interdigitate with each other. The second fixed electrode 16b has a comb shape corresponding to a comb shape of the second movable electrode 13b.

The first fixed electrode 16a has an electret formed in the vicinity of a surface thereof facing the first movable electrode 13a. Thus, the first fixed electrode 16a is an electretized electrode which is semi-permanently charged. In the present embodiment, the comb portion 17a of the first fixed electrode 16a is provided with an electret having a negative charge. For example, an oxide film having a fixed negative charge is formed as an electret film (layer) on the comb portion 17a. Since the negatively charged electret is provided on the comb portion 17a, an electrostatic induction occurs in the first fixed electrode 16a so that a positive charge is induced inside the first fixed electrode 16a.

The comb portion 14a of the first movable electrode 13a is arranged so as to face the comb portion 17a of the first fixed electrode 16a which is negatively charged. Therefore, when an electrostatic induction occurs between the first movable electrode 13a and the first fixed electrode 16a, a positive charge is induced in the first movable electrode 13a. The comb portion 14a of the first movable electrode 13a is charged by an electric charge induced by an electric field of the electret of the first fixed electrode 16a. Note that the first fixed electrode 16a is in a negatively charged state as a whole, as schematically indicated by symbols "-" in the figure.

A capacitance (electrostatic capacitance) is formed between the first movable electrode 13a and the first fixed electrode 16a. An area of a region where the first movable electrode 13a and the first fixed electrode 16a face each other changes in accordance with a spacing (distance) between the first movable electrode 13a and the first fixed electrode 16a. The electrostatic capacitance (or a magnitude thereof) between the first movable electrode 13a and the first fixed electrode 16a increases or decreases in accordance with the spacing between the first movable electrode 13a and the first fixed electrode 16a.

The second fixed electrode 16b has an electret formed in the vicinity of a surface thereof facing the second movable electrode 13b. Thus, the second fixed electrode 16b is an electretized electrode which is semi-permanently charged. In the present embodiment, the comb portion 17b of the second fixed electrode 16b is provided with an electret having a negative charge. Since the negatively charged electret is provided on the comb portion 17b, an electrostatic induction occurs in the second fixed electrode 16b so that a positive charge is induced inside the second fixed electrode 16b.

The comb portion 14b of the second movable electrode 13b is arranged so as to face the comb portion 17b of the second fixed electrode 16b which is negatively charged. Therefore, when an electrostatic induction occurs between the second movable electrode 13b and the second fixed electrode 16b, a positive charge is induced in the second movable electrode 13b. The comb portion 14b of the second movable electrode 13b is charged by an electric charge induced by an electric field of the electret of the second fixed electrode 16b. Note that the second fixed electrode 16b is in a negatively charged state as a whole, as schematically indicated by symbols "-" in the figure.

An electrostatic capacitance is formed between the second movable electrode 13b and the second fixed electrode 16b. An area of a region where the second movable electrode 13b and the second fixed electrode 16b face each other changes in accordance with a spacing between the second movable electrode 13b and the second fixed electrode 16b. The electrostatic capacitance between the second movable electrode 13b and the second fixed electrode 16b increases or decreases in accordance with the spacing between the second movable electrode 13b and the second fixed electrode 16b.

Note that the first fixed electrode 16a and the second fixed electrode 16b may be provided with an electret having a positive charge. Alternatively, the first movable electrode 13a and the second movable electrode 13b may be provided with an electret having a positive charge or a negative charge.

The holding units 18 are made of an elastic material and hold (support) the movable unit 12. The holding units 18 may be made of a metal material or may be made of any flexible material. The movable unit 12 is elastically supported by the holding units 18 and can move (vibrate) in the X-axis direction. The first movable electrode 13a and the second movable electrode 13b of the movable unit 12 are held by the holding units 18 so that they can vibrate in the X-axis direction with respect to the support frame 11. Note that a spring constant of the holding units 18 is determined by simulations, experiments, or the like.

When a vibration is applied to the vibration-driven energy harvester 10 from the outside, the holding units 18 are subjected to deflection (elastically deformed). This causes the movable unit 12 to vibrate in the X-axis direction, so that the first movable electrode 13a and the second movable electrode 13b are displaced accordingly. Due to the vibration of the movable unit 12, the first movable electrode 13a and the second movable electrode 13b vibrate with respect to the first fixed electrode 16a and the second fixed electrode 16b, respectively, to change a positional relationship between the first movable electrode 13a and the first fixed electrode 16a and a positional relationship between the second movable electrode 13b and the second fixed electrode 16b. As the movable unit 12 moves in the X direction, the comb portion 14a of the first movable electrode 13a is moved closer to and away from the comb portion 17a of the first fixed electrode 16a. As the movable unit 12 moves in the X direction, the comb portion 14b of the second movable electrode 13b is moved closer to and away from the comb portion 17b of the second fixed electrode 16b.

The movement of the movable unit 12 leads to a change in an area of a region in the comb portion 14a of the first movable electrode 13a facing the comb portion 17a of the first fixed electrode 16a. In accordance with this change in the area, the electrostatic capacitance of the first movable electrode 13a and the first fixed electrode 16a changes, which then leads to a change in a charge amount induced in the first movable electrode 13a by the electret of the first fixed electrode 16a. Additionally, a charge amount induced in the first fixed electrode 16a changes. In this case, a charge is transferred between the first fixed electrode 16a and the outside (the conversion unit 20 in Fig. 1) electrically connected to the first fixed electrode 16a. The charge is transferred in a connection portion (wiring, terminal, etc.) W1 shown in Figs. 1 and 2, so that a current is generated between the first fixed electrode 16a and the conversion unit 20.

Additionally, the movement of the movable unit 12 leads to a change in an area of a region in the comb portion 14b of the second movable electrode 13b facing the comb portion 17b of the second fixed electrode 16b. In accordance with this change in the area, the electrostatic capacitance of the second movable electrode 13b and the second fixed electrode 16b changes, which then leads to a change in a charge amount induced in the second movable electrode 13b by the electret of the second fixed electrode 16b. Additionally, a charge amount induced in the second fixed electrode 16b changes. In this case, a charge is transferred between the second fixed electrode 16b and the outside (the conversion unit 20 in Fig. 1) electrically connected to the second fixed electrode 16b. The charge is transferred in a wiring W2 shown in Figs. 1 and 2, so that a current is generated between the second fixed electrode 16b and the conversion unit 20.

As described above, when a vibration is applied to the vibration-driven energy harvester 10, the electrostatic capacitance between the first movable electrode 13a and the first fixed electrode 16a changes, while the electrostatic capacitance between the second movable electrode 13b and the second fixed electrode 16b also changes. The electrostatic capacitance between the first movable electrode 13a and the first fixed electrode 16a and the electrostatic capacitance between the second movable electrode 13b and the second fixed electrode 16b change in opposite phases to each other. The varying electrostatic capacitance between the first movable electrode 13a and the first fixed electrode 16a causes an alternating current to flow between the first fixed electrode 16a and the conversion unit 20 to generate an electric power. Additionally, the varying electrostatic capacitance between the second movable electrode 13b and the second fixed electrode 16b causes an alternating current to flow between the second fixed electrode 16b and the conversion unit 20 to generate an electric power. An alternating current voltage is thus supplied from the vibration-driven energy harvester 10 to the conversion unit 20.

In this way, in the power generator 1 according to the present embodiment, an alternating current power can be generated by utilizing a change in an electrostatic capacitance caused by a vibration. Since the vibration-driven energy harvester 10 generates an electric power between the first movable electrode 13a and the first fixed electrode 16a and between the second movable electrode 13b and the second fixed electrode 16b, a power generation amount can be increased. Vibration energy can be efficiently converted into electrical energy to improve a power generation efficiency.

As shown in Fig. 1, the conversion unit 20 has a plurality of rectifying units 21 (rectifying units 21a to 21f) and has a function of converting alternating current into direct current. The conversion unit 20 may be a rectifier circuit 20 that converts alternating current into direct current. Each of the six rectifying units (rectifying element) 21 is composed of a diode. The conversion unit 20 is electrically connected to the vibration-driven energy harvester 10, and an alternating current voltage is input from the vibration-driven energy harvester 10 to the conversion unit 20. The conversion unit 20 converts the alternating current (voltage) from the vibration-driven energy harvester 10 into direct current and outputs it to a first output unit 25 and a second output unit 26. Note that the rectifying unit 21 may be composed of a MOS transistor or a bipolar transistor.

The first output unit 25 and the second output unit 26 are components (wiring, terminals, etc.) from which the current (voltage) converted into direct current by the conversion unit 20 is output. An electric power is supplied to the outside of the power generator 1 (an electric element 30 in Fig. 1) via the first output unit 25 and the second output unit 26.

The electric element 30 is an electric component to which the electric power generated by the vibration-driven energy harvester 10 and the conversion unit 20 is supplied. The electric element 30 is, for example, a power accumulating unit such as a capacitor or a battery, or a conversion unit such as a DC-DC converter. The electric element 30 acts as a load and is thus schematically represented by a resistor R in the figure. Note that the power generator 1 may be configured to include the electric element 30.

The rectifying unit 21a of the conversion unit 20 is provided between the first fixed electrode 16a of the vibration-driven energy harvester 10 and the first output unit 25. In the example shown in Fig. 1, the rectifying unit 21a is composed of a diode Da that is electrically connected to the first fixed electrode 16a of the vibration-driven energy harvester 10 and the first output unit 25. An anode (terminal) of the diode Da is connected to the first fixed electrode 16a of the vibration-driven energy harvester 10. A cathode (terminal) of the diode Da is connected to one end 31 of the resistor R of the electric element 30 via the first output unit 25.

The rectifying unit 21b is provided between the first fixed electrode 16a of the vibration-driven energy harvester 10 and the second output unit 26. The rectifying unit 21b is composed of a diode Db that is electrically connected to the first fixed electrode 16a of the vibration-driven energy harvester 10 and the second output unit 26. An anode of the diode Db is connected to the other end 32 of the resistor R of the electric element 30 and to a ground wire (ground line), via the second output unit 26. A cathode of the diode Db is connected to the first fixed electrode 16a of the vibration-driven energy harvester 10.

The rectifying unit 21c is provided between the movable unit 12 of the vibration-driven energy harvester 10 and the first output unit 25. The rectifying unit 21c is composed of a diode Dc that is electrically connected to each of the first movable electrode 13a and the second movable electrode 13b of the vibration-driven energy harvester 10 and the first output unit 25. An anode of the diode Dc is connected to the first movable electrode 13a and the second movable electrode 13b of the vibration-driven energy harvester 10. A cathode of the diode Dc is connected to one end 31 of the resistor R via the first output unit 25.

The rectifying unit 21d is provided between the movable unit 12 of the vibration-driven energy harvester 10 and the second output unit 26. The rectifying unit 21d is composed of a diode Dd that is electrically connected to each of the first movable electrode 13a and the second movable electrode 13b of the vibration-driven energy harvester 10 and the second output unit 26. An anode of the diode Dd is connected to the other end 32 of the resistor R and to a ground wire, via the second output unit 26. A cathode of the diode Dd is connected to the first movable electrode 13a and the second movable electrode 13b of the vibration-driven energy harvester 10.

The rectifying unit 21e is provided between the second fixed electrode 16b of the vibration-driven energy harvester 10 and the first output unit 25. The rectifying unit 21e is composed of a diode De that is electrically connected to the second fixed electrode 16b of the vibration-driven energy harvester 10 and the first output unit 25. An anode of the diode De is connected to the second fixed electrode 16b of the vibration-driven energy harvester 10. A cathode of the diode De is connected to one end 31 of the resistor R via the first output unit 25.

The rectifying unit 21f is provided between the second fixed electrode 16b of the vibration-driven energy harvester 10 and the second output unit 26. The rectifying unit 21f is composed of a diode Df that is electrically connected to the second fixed electrode 16b of the vibration-driven energy harvester 10 and the second output unit 26. An anode of the diode Df is connected to the other end 32 of the resistor R and to a ground wire, via the second output unit 26. A cathode of the diode Df is connected to the second fixed electrode 16b of the vibration-driven energy harvester 10.

Potentials of the anodes of the diodes Db, Dd, and Df are ground potentials.

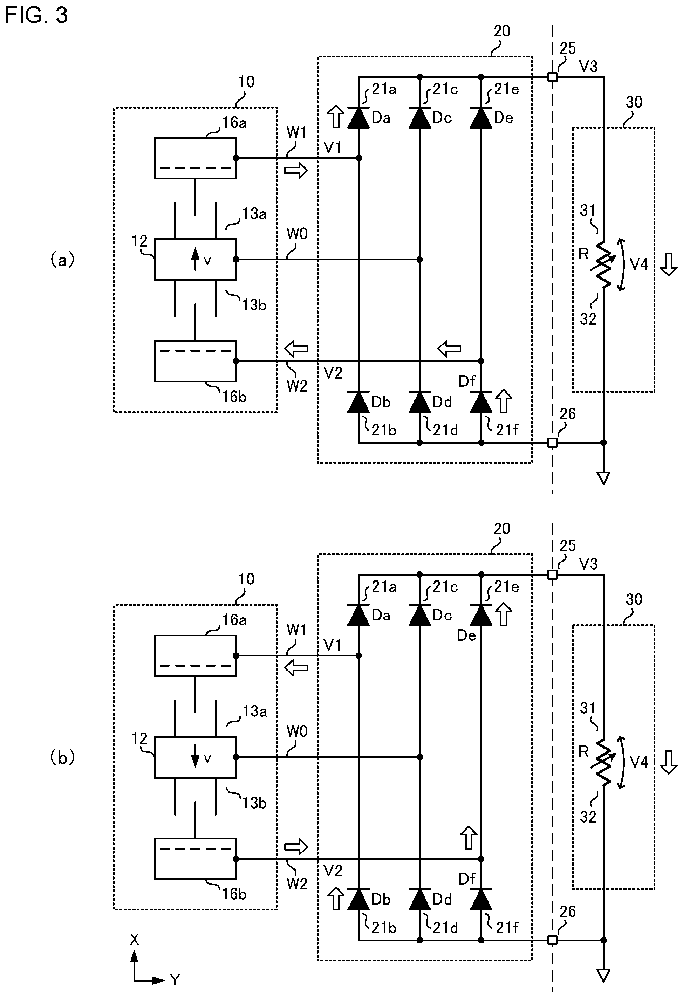

Fig. 3 is a view illustrating an example of an operation of the power generator according to the first embodiment. Figs. 3(a), (b) schematically show currents generated in the power generator 1 when the movable unit 12 vibrates in the X direction with respect to the first fixed electrode 16a and the second fixed electrode 16b. Fig. 3(a) shows a case where the movable unit 12 moves in the positive X direction and Fig. 3(b) shows a case where the movable unit 12 moves in the negative X direction.

In the state shown in Fig. 3(a), as the movable unit 12 moves in the positive X direction, an area of a region where the first movable electrode 13a of the movable unit 12 and the first fixed electrode 16a face each other increases, while an area of a region where the second movable electrode 13b of the movable unit 12 and the second fixed electrode 16b face each other decreases. Accordingly, an electrostatic capacitance between the first movable electrode 13a and the first fixed electrode 16a increases, while an electrostatic capacitance between the second movable electrode 13b and the second fixed electrode 16b decreases.

When the electrostatic capacitance between the first movable electrode 13a and the first fixed electrode 16a increases, the amount of positive charge induced in the first movable electrode 13a by the electret of the first fixed electrode 16a increases, while the amount of positive charge induced inside the first fixed electrode 16a decreases. At this time, negative charges (electrons) try to move from the conversion unit 20 side to the first fixed electrode 16a side via the wiring W1, so that the rectifying unit 21a of the conversion unit 20 is brought into an ON state (into a forward bias state). The rectifying unit 21b is brought into an OFF state (into a reverse bias state).

Additionally, when the electrostatic capacitance between the second movable electrode 13b and the second fixed electrode 16b decreases, the amount of positive charge induced in the second movable electrode 13b by the electret of the second fixed electrode 16b decreases, while the amount of positive charge induced inside the second fixed electrode 16b increases. At this time, negative charges try to move from the second fixed electrode 16b side to the conversion unit 20 side via the wiring W2, so that the rectifying unit 21f of the conversion unit 20 is brought into the ON state. The rectifying unit 21e is brought into the OFF state.

Once the rectifying unit 21a and the rectifying unit 21f are brought into the ON state, a current flows as indicated by a white arrow in Fig. 3(a). The rectifying unit 21a supplies the current from the first fixed electrode 16a to one end 31 of the resistor R, and the rectifying unit 21f supplies the current from the ground wire, to which the other end 32 of the resistor R and the anode of the rectifying unit 21f are connected, to the second fixed electrode 16b.

On the other hand, in the state shown in Fig. 3(b), as the movable unit 12 moves in the negative X direction, an area of a region where the first movable electrode 13a of the movable unit 12 and the first fixed electrode 16a face each other decreases, while an area of a region where the second movable electrode 13b of the movable unit 12 and the second fixed electrode 16b face each other increases. Accordingly, an electrostatic capacitance between the first movable electrode 13a and the first fixed electrode 16a decreases, while an electrostatic capacitance between the second movable electrode 13b and the second fixed electrode 16b increases.

When the electrostatic capacitance between the first movable electrode 13a and the first fixed electrode 16a decreases, the amount of positive charge induced in the first movable electrode 13a decreases, while the amount of positive charge induced inside the first fixed electrode 16a increases. Negative charges try to move from the fist fixed electrode 16a side to the conversion unit 20 side via the wiring W1, so that the rectifying unit 21b is brought into the ON state. The rectifying unit 21a is brought into the OFF state.

Additionally, when the electrostatic capacitance between the second movable electrode 13b and the second fixed electrode 16b increases, the amount of positive charge induced in the second movable electrode 13b increases, while the amount of positive charge induced inside the second fixed electrode 16b decreases. Negative charges try to move from the conversion unit 20 side to the second fixed electrode 16b side via the wiring W2, so that the rectifying unit 21e is brought into the ON state. The rectifying unit 21f is brought into the OFF state.

Once the rectifying unit 21b and the rectifying unit 21e are brought into the ON state, a current flows as indicated by a white arrow in Fig. 3(b). The rectifying unit 21e supplies the current from the second fixed electrode 16b to one end 31 of the resistor R, and the rectifying unit 21b supplies the current from the ground wire, to which the other end 32 of the resistor R and the anode of the rectifying unit 21b are connected, to the first fixed electrode 16a.

In each of the case where the movable unit 12 moves in the positive X direction and the case when the movable unit 12 moves in the negative X direction, it can be seen that a current flows in a given direction through the resistor R of the electric element 30, as shown in Figs. 3(a) and 3(b).

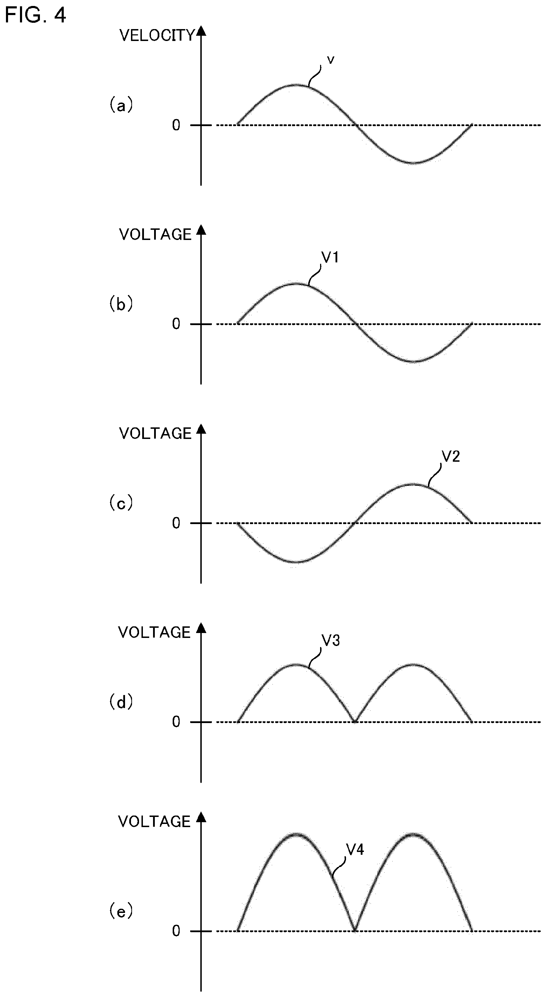

Fig. 4 is a graph illustrating a process performed by the power generator according to the first embodiment. Fig. 4 shows a moving velocity v of the movable unit 12 (Fig. 4 (a)), a voltage V1 of the wiring W1 (Fig. 4 (b)), a voltage V2 of the wiring W2 (Fig. 4 (c)), a voltage V3 (Fig. 4 (d)) which is a voltage obtained by rectifying V1 or V2 and applied to the electric element 30, and a voltage V4 (Fig. 4 (e)) which is a voltage obtained by rectifying V1 and V2 and applied to the electric element 30 with respect to the same time axis. In Fig. 4(a), the vertical axis represents a magnitude of the velocity. In Figs. 4(b), (c), (d), and (e), the vertical axis represents a magnitude of the voltage.

As described above with reference to Figs. 3(a) and 3(b), the conversion unit 20 is supplied with an alternating current which changes its direction between the case where the movable unit 12 moves in the positive X direction, that is, when the velocity v has a positive value and the case where the movable unit 12 moves in the negative X direction, that is when the velocity v has a negative value. As shown in Figs. 4(b) and 4(c), the voltage V1 of the wiring W1 and the voltage V2 of the wiring W2 are alternating current voltages having opposite phases.

When the velocity v of the movable unit 12 has a positive value, the conversion unit 20 supplies a direct current to the electric element 30 by the rectifying unit 21a, wherein the direct current is based on a change in the electrostatic capacitance between the first fixed electrode 16a and the movable unit 12. In this case, as shown in Fig. 4(d), the voltage V3 at one end 31 of the resistor R has a positive value. The voltage V3 is here a positive voltage based on the direct current from the first fixed electrode 16a and a resistance value of the resistor R.

Additionally, when the velocity v of the movable unit 12 has a negative value, the conversion unit 20 supplies a direct current to the electric element 30 by the rectifying unit 21e, wherein the direct current is based on a change in the electrostatic capacitance between the second fixed electrode 16b and the movable unit 12. In this case, as shown in Fig. 4(d), the voltage V3 at one end 31 of the resistor R has a positive value. The voltage V3 is here a positive voltage based on the direct current from the second fixed electrode 16b and a resistance value of the resistor R.

In this way, the conversion unit 20 can convert alternating current outputs supplied by the first fixed electrode 16a and the movable unit 12 and by the second fixed electrode 16b and the movable unit 12 to output them to the electric element 30. The voltage output to the electric element 30 is a voltage obtained by a full-wave rectification of the voltage V1 and the voltage V2. In the example shown in Fig. 3, a voltage V4 of the electric element 30, that is, a potential difference across the resistor R is a sum of a voltage obtained by the full-wave rectification of the voltage V1 and a voltage obtained by the full-wave rectification of the voltage V2 as shown in Fig. 4(e). In the present embodiment, a voltage obtained by the power generation from the movable unit 12 and the first fixed electrode 16a and a voltage obtained by the power generation from the movable unit 12 and the second fixed electrode 16b can be efficiently supplied to the electric element 30.

Further, in the present embodiment, a conversion from alternating current to direct current is performed by six diodes. It is thus possible to efficiently generate an electric power without increasing a size (area) of the power generator 1. An increase in the size of the power generator 1 and thus an increase in manufacturing cost can be avoided. Note that the diodes Da to Df may be arranged in an orientation opposite to that in the example shown in Fig. 3. In Fig. 3, a polarity of an output voltage may be inverted by inverting the anode and cathode of each diode Da to Df.

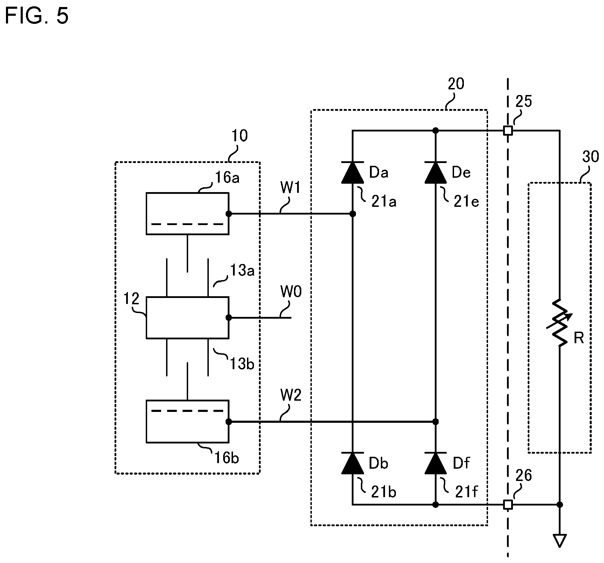

Fig. 5 is a view showing an example of a configuration of a power generator according to a comparative example. In the comparative example, the power generator can be reduced in size and manufacturing cost because the power generator does not have the rectifying unit 21c and the rectifying unit 21d, as compared with the power generator in Fig. 1. However, in the comparative example, the wiring WO connected to the first movable electrode 13a and the second movable electrode 13b of the movable unit 12 is in an electrically floating state. Therefore, a voltage of the wiring WO, that is, voltages (potentials) of the first movable electrode 13a and the second movable electrode 13b may become unstable and may vary due to a slight leakage current, static electricity, or the like. The power generator according to the comparative example can fail to provide stable power generation.

On the other hand, in the power generator 1 according to the present embodiment, the rectifying unit 21c and the rectifying unit 21d connected to the wiring WO are provided. The movable unit 12 is electrically connected to the first output unit 25 and the electric element 30 via the rectifying unit 21c, and is electrically connected to the second output unit 26 and the ground wire via the rectifying unit 21d. Therefore, it is possible to prevent the voltage of the wiring WO from becoming unstable. As a result, a stable power generation operation can be realized.

According to the above-described embodiment, the following operational advantages can be achieved.
(1) A power generator 1 comprises: a power generation element 10 that has a first electrode (first fixed electrode 16a), a second electrode (second fixed electrode 16b), and a movable unit provided between the first electrode and the second electrode, the movable unit having a third electrode (first movable electrode 13a) facing the first electrode and a fourth electrode (second movable electrode 13b) facing the second electrode, the power generation element generating an electric power due to a vibration; and a conversion unit 20 that has a first rectifying unit 21a provided between the first electrode and the first output unit 25, a second rectifying unit 21b provided between the first electrode and the second output unit 26, a third rectifying unit 21e provided between the second electrode and the first output unit 25, a fourth rectifying unit 21f provided between the second electrode and the second output unit 26, a fifth rectifying unit 21c provided between the movable unit 12 and the first output unit 25, and a sixth rectifying unit 21d provided between the movable unit 12 and the second output unit 26, the conversion unit converting an alternating current generated by the power generation element into a direct current. In this way, the power generator 1 according to the present embodiment can efficiently supply an electric power obtained by power generation to the electric element 30. Further, since rectification is performed by the six rectifying units, it is possible to minimize an increase in the size of the power generator 1 and prevent an increase in the manufacturing cost.
(2) A rectifier circuit 20 is connectable to a power generation element 10 having a first electrode (first fixed electrode 16a), a second electrode (second fixed electrode 16b), and a movable unit 12 provided between the first electrode and the second electrode, the movable unit having a third electrode (first movable electrode 13a) and a fourth electrode (second movable electrode 13b). The rectifier circuit 20 comprises: a first rectifying unit 21a provided between the first electrode and the first output unit 25, a second rectifying unit 21b provided between the first electrode and the second output unit 26, a third rectifying unit 21e provided between the second electrode and the first output unit 25, a fourth rectifying unit 21f provided between the second electrode and the second output unit 26, a fifth rectifying unit 21c provided between the movable unit 12 and the first output unit 25, and a sixth rectifying unit 21d provided between the movable unit 12 and the second output unit 26. In this way, the rectifier circuit (conversion unit) 20 can convert an alternating current output of the power generation element 10 into direct current and supply the converted current to the electric element 30. Further, since rectification is performed by the six rectifying units, it is possible to minimize an increase in the area of the rectifier circuit and prevent an increase in the manufacturing cost.

Although various embodiments and modifications have been described above, the present invention is not limited thereto. Other aspects conceivable within the scope of the technical idea of the present invention are also encompassed within the scope of the present invention.

### REFERENCE SIGNS LIST

1 ... power generator, 10 ... power generation element, 12 ... movable unit, 13a ... first movable electrode, 13b ... second movable electrode, 16a ... first fixed electrode, 16b ... second fixed electrode, 20 ... conversion unit, 21a, 21b, 21c, 21d, 21e, 21f ... rectifying unit, 25 ... first output unit, 26 ... second output unit, 30 ... electric element since rectification is performed by the six rectifying units, it is possible to minimize an increase in the size of the power generator 1 and prevent an increase in the manufacturing cost.

(2) A rectifier circuit 20 is connectable to a power generation element 10 having a first electrode (first fixed electrode 16a), a second electrode (second fixed electrode 16b), and a movable unit 12 provided between the first electrode and the second electrode, the movable unit having a third electrode (first movable electrode 13a) and a fourth electrode (second movable electrode 13b). The rectifier circuit 20 comprises: a first rectifying unit 21a provided between the first electrode and the first output unit 25, a second rectifying unit 21b provided between the first electrode and the second output unit 26, a third rectifying unit 21e provided between the second electrode and the first output unit 25, a fourth rectifying unit 21f provided between the second electrode and the second output unit 26, a fifth rectifying unit 21c provided between the movable unit 12 and the first output unit 25, and a sixth rectifying unit 21d provided between the movable unit 12 and the second output unit 26. In this way, the rectifier circuit (conversion unit) 20 according to the present embodiment can convert an alternating current output of the power generation element 10 into direct current and supply the converted current to the electric element 30. Further, since rectification is performed by the six rectifying units, it is possible to minimize an increase in the area of the rectifier circuit and prevent an increase in the manufacturing cost.

Although various embodiments and modifications have been described above, the present invention is not limited thereto.

### REFERENCE SIGNS LIST

1 ... power generator, 10 ... power generation element, 12 ... movable unit, 13a ... first movable electrode, 13b ... second movable electrode, 16a ... first fixed electrode, 16b ... second fixed electrode, 20 ... conversion unit, 21a, 21b, 21c, 21d, 21e, 21f ... rectifying unit, 25 ... first output unit, 26 ... second output unit, 30 ... electric element

## Claims

1. A power generator (1), comprising:
a power generation element (10) that has a first electrode (16a), a second electrode (16b), and a movable unit (12) provided between the first electrode (16a) and the second electrode (16b), the movable unit (12) having a third electrode (14a) facing the first electrode (16a) and a fourth electrode (14b) facing the second electrode (16b), the power generation element (10) generating an electric power due to a vibration; and
a conversion unit (20) converting an alternating current generated by the power generation element (10) into a direct current;
**characterized in that**
the conversion unit (20) that has a first rectifying unit (21a) provided between the first electrode (16a) and a first output unit (25), a second rectifying unit (21b) provided between the first electrode (16a) and a second output unit (26), a third rectifying unit (21e) provided between the second electrode (16b) and the first output unit (25), a fourth rectifying unit (21f) provided between the second electrode (16b) and the second output unit (26), a fifth rectifying unit (21c) provided between the movable unit (12) and the first output unit (25), and a sixth rectifying unit (21d) provided between the movable unit (12) and the second output unit (26);
wherein:
the first rectifying unit (21a) is connected to the first electrode (16a) and the first output unit (25);
the second rectifying unit (21b) is connected to the first electrode (16a) and the second output unit (26);
the third rectifying unit (21e) is connected to the second electrode (16b) and the first output unit (25);
the fourth rectifying unit (21f) is connected to the second electrode (16b) and the second output unit (26);
the fifth rectifying unit (21c) is connected to the third electrode (14a), the fourth electrode (14b), and the first output unit (25); and
the sixth rectifying unit (21d) is connected to the third electrode (14a), the fourth electrode (14b), and the second output unit (26),
wherein:
an alternating current generated by the first electrode (16a) and the third electrode (14a) and an alternating current generated by the second electrode (16b) and the fourth electrode (14b) have opposite phases.

2. The power generator (1) according to claim 1, wherein:
when a vibration is applied from the outside, the movable unit (12) vibrates between the first electrode (16a) and the second electrode (16b); and
when the movable unit (12) vibrates, the power generation element (10) generates an electric power by the first electrode (16a) and the third electrode (14a) and generates an electric power by the second electrode (16b) and the fourth electrode (14b).

3. The power generator (1) according to claim 1 or 2, wherein:
the conversion unit (20) rectifies the alternating current generated by the first electrode (16a) and the third electrode (14a) via the first rectifying unit (21a) and the second rectifying unit (21b), and rectifies the alternating current generated by the second electrode (16b) and the fourth electrode (14b) via the third rectifying unit (21e) and the fourth rectifying unit (21f).

4. The power generator (1) according to any one of claims 1 to 3, wherein:
when the movable unit (12) moves in a first direction, the first rectifying unit (21a) supplies a current from the first electrode (16a) to the first output unit (25); and
when the movable unit (12) moves in a second direction opposite to the first direction, the third rectifying unit (21e) supplies a current from the second electrode (16b) to the first output unit (25).

5. The power generator (1) according to any one of claims 1 to 4, wherein:
the first rectifying unit (21a), the second rectifying unit (21b), the third rectifying unit (21e), the fourth rectifying unit (21f), the fifth rectifying unit (21c), and the sixth rectifying unit (21d) are diodes.

6. The power generator (1) according to any one of claims 1 to 5, wherein:
the first electrode (16a) and the second electrode (16b) each have an electret.

## Patentansprüche

1. Stromgenerator (1) mit:
einem Stromerzeugungselement (10), das eine erste Elektrode (16a), eine zweite Elektrode (16b) und eine zwischen der ersten Elektrode (16a) und der zweiten Elektrode (16b) vorgesehene bewegliche Einheit (12) aufweist, wobei die bewegliche Einheit (12) eine der ersten Elektrode (16a) zugewandte dritte Elektrode (14a) und eine der zweiten Elektrode (16b) zugewandte vierte Elektrode (14b) aufweist, wobei das Stromerzeugungselement (10) aufgrund einer Schwingung elektrische Energie erzeugt; und
eine Umwandlungseinheit (20), die einen von dem Stromerzeugungselement (10) erzeugten Wechselstrom in einen Gleichstrom umwandelt;
**dadurch gekennzeichnet, dass**
die Umwandlungseinheit (20) eine zwischen der ersten Elektrode (16a) und einer ersten Ausgabeeinheit (25) vorgesehene erste Gleichrichtereinheit (21a), eine zwischen der ersten Elektrode (16a) und einer zweiten Ausgabeeinheit (26) vorgesehene zweite Gleichrichtereinheit (21b), eine zwischen der zweiten Elektrode (16b) und der ersten Ausgabeeinheit (25) vorgesehene dritte Gleichrichtereinheit (21e), eine zwischen der zweiten Elektrode (16b) und der zweiten Ausgabeeinheit (26) vorgesehene vierte Gleichrichtereinheit (21f), eine zwischen der beweglichen Einheit (12) und der ersten Ausgabeeinheit (25) vorgesehene fünfte Gleichrichtereinheit (21c) und eine zwischen der beweglichen Einheit (12) und der zweiten Ausgabeeinheit (26) vorgesehene sechste Gleichrichtereinheit (21d) aufweist;
wobei:
die erste Gleichrichtereinheit (21a) mit der ersten Elektrode (16a) und der ersten Ausgabeeinheit (25) verbunden ist;
die zweite Gleichrichtereinheit (21b) mit der ersten Elektrode (16a) und der zweiten Ausgabeeinheit (26) verbunden ist;
die dritte Gleichrichtereinheit (21e) mit der zweiten Elektrode (16b) und der ersten Ausgabeeinheit (25) verbunden ist;
die vierte Gleichrichtereinheit (21f) mit der zweiten Elektrode (16b) und der zweiten Ausgabeeinheit (26) verbunden ist;
die fünfte Gleichrichtereinheit (21c) mit der dritten Elektrode (14a), der vierten Elektrode (14b) und der ersten Ausgabeeinheit (25) verbunden ist; und
die sechste Gleichrichtereinheit (21d) mit der dritten Elektrode (14a), der vierten Elektrode (14b) und der zweiten Ausgabeeinheit (26) verbunden ist,
wobei:
ein von der ersten Elektrode (16a) und der dritten Elektrode (14a) erzeugter Wechselstrom und ein von der zweiten Elektrode (16b) und der vierten Elektrode (14b) erzeugter Wechselstrom entgegengesetzte Phasen aufweisen.

2. Stromgenerator (1) nach Anspruch 1, wobei:
bei Einwirkung einer Schwingung von außen die bewegliche Einheit (12) zwischen der ersten Elektrode (16a) und der zweiten Elektrode (16b) schwingt; und
wenn die bewegliche Einheit (12) schwingt, das Stromerzeugungselement (10) durch die erste Elektrode (16a) und die dritte Elektrode (14a) elektrische Energie erzeugt und durch die zweite Elektrode (16b) und die vierte Elektrode (14b) elektrische Energie erzeugt.

3. Stromgenerator (1) nach Anspruch 1 oder 2, wobei:
die Umwandlungseinheit (20) den von der ersten Elektrode (16a) und der dritten Elektrode (14a) erzeugten Wechselstrom über die erste Gleichrichtereinheit (21a) und die zweite Gleichrichtereinheit (21b) gleichrichtet und den von der zweiten Elektrode (16b) und der vierten Elektrode (14b) erzeugten Wechselstrom über die dritte Gleichrichtereinheit (21e) und die vierte Gleichrichtereinheit (21f) gleichrichtet.

4. Stromgenerator (1) nach einem der Ansprüche 1 bis 3, wobei:
wenn sich die bewegliche Einheit (12) in einer ersten Richtung bewegt, die erste Gleichrichtereinheit (21a) der ersten Ausgabeeinheit (25) einen Strom von der ersten Elektrode (16a) zuführt; und
wenn sich die bewegliche Einheit (12) in einer der ersten Richtung entgegengesetzten zweiten Richtung bewegt, die dritte Gleichrichtereinheit (21e) der ersten Ausgabeeinheit (25) einen Strom von der zweiten Elektrode (16b) zuführt.

5. Stromgenerator (1) nach einem der Ansprüche 1 bis 4, wobei:
die erste Gleichrichtereinheit (21a), die zweite Gleichrichtereinheit (21b), die dritte Gleichrichtereinheit (21e), die vierte Gleichrichtereinheit (21f), die fünfte Gleichrichtereinheit (21c) und die sechste Gleichrichtereinheit (21d) Dioden sind.

6. Stromgenerator (1) nach einem der Ansprüche 1 bis 5, wobei:
die erste Elektrode (16a) und die zweite Elektrode (16b) jeweils einen Elektreten aufweisen.

## Revendications

1. Générateur de puissance (1), comprenant :
un élément de génération de puissance (10) qui a une première électrode (16a), une deuxième électrode (16b) et une unité mobile (12) prévue entre la première électrode (16a) et la deuxième électrode (16b), l'unité mobile (12) ayant une troisième électrode (14a) faisant face à la première électrode (16a) et une quatrième électrode (14b) faisant face à la deuxième électrode (16b), l'élément de génération de puissance (10) générant une puissance électrique due à une vibration ; et
une unité de conversion (20) convertissant un courant alternatif généré par l'élément de génération de puissance (10) en courant continu ;
**caractérisé en ce que**
l'unité de conversion (20) a une première unité de redressement (21a) prévue entre la première électrode (16a) et une première unité de sortie (25), une deuxième unité de redressement (21b) prévue entre la première électrode (16a) et une deuxième unité de sortie (26), une troisième unité de redressement (21e) prévue entre la deuxième électrode (16b) et la première unité de sortie (25), une quatrième unité de redressement (21f) prévue entre la deuxième électrode (16b) et la deuxième unité de sortie (26), une cinquième unité de redressement (21c) prévue entre l'unité mobile (12) et la première unité de sortie (25) et une sixième unité de redressement (21d) prévue entre l'unité mobile (12) et la deuxième unité de sortie (26) ;
dans lequel :
la première unité de redressement (21a) est connectée à la première électrode (16a) et à la première unité de sortie (25) ;
la deuxième unité de redressement (21b) est connectée à la première électrode (16a) et à la deuxième unité de sortie (26) ;
la troisième unité de redressement (21e) est connectée à la deuxième électrode (16b) et à la première unité de sortie (25) ;
la quatrième unité de redressement (21f) est connectée à la deuxième électrode (16b) et à la deuxième unité de sortie (26) ;
la cinquième unité de redressement (21c) est connectée à la troisième électrode (14a), à la quatrième électrode (14b) et à la première unité de sortie (25) ; et
la sixième unité de redressement (21d) est connectée à la troisième électrode (14a), à la quatrième électrode (14b) et à la deuxième unité de sortie (26),
dans lequel :
un courant alternatif généré par la première électrode (16a) et la troisième électrode (14a) et un courant alternatif généré par la deuxième électrode (16b) et la quatrième électrode (14b) ont des phases opposées.

2. Générateur de puissance (1) selon la revendication 1, dans lequel :
lorsqu'une vibration est appliquée depuis l'extérieur, l'unité mobile (12) vibre entre la première électrode (16a) et la deuxième électrode (16b) ; et
lorsque l'unité mobile (12) vibre, l'élément de génération de puissance (10) génère une puissance électrique par la première électrode (16a) et la troisième électrode (14a) et génère une puissance électrique par la deuxième électrode (16b) et la quatrième électrode (14b).

3. Générateur de puissance (1) selon la revendication 1 ou 2, dans lequel :
l'unité de conversion (20) redresse le courant alternatif généré par la première électrode (16a) et la troisième électrode (14a) via la première unité de redressement (21a) et la deuxième unité de redressement (21b), et redresse le courant alternatif généré par la deuxième électrode (16b) et la quatrième électrode (14b) via la troisième unité de redressement (21e) et la quatrième unité de redressement (21f).

4. Générateur de puissance (1) selon l'une quelconque des revendications 1 à 3, dans lequel :
lorsque l'unité mobile (12) se déplace dans une première direction, la première unité de redressement (21a) fournit un courant de la première électrode (16a) à la première unité de sortie (25) ; et
lorsque l'unité mobile (12) se déplace dans une deuxième direction opposée à la première direction, la troisième unité de redressement (21e) fournit un courant de la deuxième électrode (16b) à la première unité de sortie (25).

5. Générateur de puissance (1) selon l'une quelconque des revendications 1 à 4, dans lequel :
la première unité de redressement (21a), la deuxième unité de redressement (21b), la troisième unité de redressement (21e), la quatrième unité de redressement (21f), la cinquième unité de redressement (21c) et la sixième unité de redressement (21d) sont des diodes.

6. Générateur de puissance (1) selon l'une quelconque des revendications 1 à 5, dans lequel :
la première électrode (16a) et la deuxième électrode (16b) ont chacune un électret.
